(19)

Europäisches
Patentamt
European
Patent Office
Office européen
des brevets

(11) **EP 3 048 765 A1**

(12) **EUROPEAN PATENT APPLICATION**

(43) Date of publication:
**27.07.2016 Bulletin 2016/30**

(51) Int Cl.:
*H04L 25/02* (2006.01)          *H04B 7/08* (2006.01)
*H04B 7/04* (2006.01)

(21) Application number: **15305059.6**

(22) Date of filing: **20.01.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Venkateswaran, Vijay
Dublin, 15 (IE)**
• **Rulikowski, Pawel
Dublin, 15 (IE)**
• **Tulino, Antonia
Holmdel, NJ 07733-1661 (US)**

(74) Representative: **Mills, Julia et al
Script IP Limited
18 Bridge Street
Frome Somerset BA11 1BB (GB)**

Remarks:
Amended claims in accordance with Rule 137(2)
EPC.

(54) **TRANSFORMING AND COMBINING SIGNALS FROM ANTENNA ARRAY**

(57)    A method of reducing a number of signals that are output for processing by an antenna array and the antenna array are disclosed. The method comprises: receiving signals at a plurality of antenna elements from at least one user equipment; transforming the signals to at least one different domain to generate sparse signals; combining at least some of the signals to form a reduced number of signals; and outputting the reduced number of sparse signals to signal processing circuitry.

FIG. 3B

**Description**

FIELD OF THE INVENTION

The present invention relates to antenna and in particular, to antenna array such as multiple input multiple output antenna.

BACKGROUND

Antenna array such as multiple input multiple output MIMO antenna are known and have been employed within wireless communications systems to improve data throughput in communications between a network node such as a base station and user equipment.

It will be appreciated that a signal transmitted between user equipment and a network node over a radio channel typically experiences many propagation paths due, for example, to reflection before arriving at a network node receiver. The signals carried on these paths each arrive at a different time, power and phase at the receiver. Similarly multiple antenna elements within a MIMO will receive a signal from the same source at slightly different times, power and phases.

Antenna elements within an antenna array are physically separated and the decoding of the signals arriving at such a network node have conventionally been decoded assuming the received signals are not too closely correlated.

As these antenna array increase in size the signal processing and number of transceivers required to process the signals received at each antenna element also becomes larger. Furthermore, there is an increase in the number of transceivers required as antenna element number increase and this increases the likelihood of failure in one or more degrading performance of the antenna. Additionally, in order to reduce interference between signals at the different antenna elements expensive insulation and casing of the elements has conventionally been used to reduce coupling which increases the correlation between signals received.

It would be desirable to provide an antenna array with at least one of improved performance and reduced costs.

SUMMARY

A first aspect of the present invention provides a method performed on signals received at a plurality of elements of an antenna array comprising: transforming said signals to at least one different domain to generate sparse signals; combining at least some of said signals to form a reduced number of signals; and outputting said reduced number of sparse signals.

The inventors of the present invention recognised that the signals received on each antenna element of an antenna array are not independent of each other, but may often be quite closely correlated. This has conventionally been viewed as a problem, however, they recognised that such data if transformed to another domain may be sparse and as such compressive sensing techniques might be used to process the signal data. The ability to use compressive sensing techniques allows a reduced amount of data to be used to find solutions to undetermined systems. This recognition allowed them to combine and transform the signals received from the antenna elements to generate a reduced number of sparse signals that can then be output to processing circuitry, their sparse nature making them suitable for compressive sensing techniques allowing channel state information to be derived and from this the original signals to be determined from a reduced number of input signals. In this regard a sparse signal is one which can be represented by a concise summary, in that many of the terms or coefficients of the signal may be zeros.

By outputting fewer signals for processing, the size and power requirements of the processing unit processing the signals may be reduced. Furthermore, the number of components prior to the processing unit may also be reduced and the reliability thereby increased. The capacity of the network will also be increased as less data is pushed into the fibre.

With regard to the transforming of domain, this may include transformations from the time domain to the frequency domain and/or the angular domain. The transforming may be done using circuitry for combining the signals received at the antenna elements, the circuitry being designed to take into account domain transformations that may occur at the antenna elements themselves. Alternatively the combining and transforming may be done downstream of transceivers, on digital signals derived from the received radio frequency signals. In such a case the transforming and combining steps may be configurable such that as changes occur in the system the combinations and transformations can be changed to address these changes.

It should be noted that although sparsity techniques have been used to reduce the hardware and RF chain complexity in existing wireless systems. This has been in the design of narrow-band receivers capable of detecting an ultra-wide band signal sparse in frequency signal for example. Similar approaches have also be exploited for code dimension i.e. CDMA/rake receiver architectures.

In the field of MIMOs traditional approaches such as least squares (LS) in MIMO and massive MIMO assume a rich scattering environment and put tough restrictions on high resolution signals with reduced number of transceivers

- channel estimation and data detection performance as well as hardware cost and complexity are compromised.

In some embodiments said method comprises a further step of converting said signals using a plurality of transceivers.

Signals received at the antenna array may be converted using transceivers. Where the step of converting the signals occurs after the steps of transforming and combining the signals then there are a reduced number of signals sent to the transceivers than would be the case in a conventional antenna array and therefore the number of transceivers required is reduced.

Existing compressive sensing techniques have not been used in the spatial domain to reduce the number of transceivers in this field. Embodiments have addressed this by using compressive sensing to effectively reconstruct the transmitted signal utilizing a (spatially) sparse scattering environment.

In some embodiments, said step of combining said at least some of said signals and said step of transforming said signals are performed together as a single step.

Although the steps of combining and transforming the signals may be performed as separate steps in either order, in many cases they are performed as a single step, the combining and the transforming being performed together.

In some embodiments, said step of combining and transforming said signals is performed prior to converting said signals at said plurality of transceivers.

In some cases, the combining and transforming the signals may be performed when they are still analogue RF signals and it may be performed using analogue circuitry with the selection of path length and the type of combining providing the transforming as well as the combining. Where the step(s) of combining and transforming is performed prior to converting the signals, then a reduced number of transceivers are required and thus, such an arrangement has advantages in reduced hardware requirements.

In other embodiments, said step of converting said signals comprises converting said signals to digital signals and said combining and transforming step is performed following this step. In this case the number of transceivers required will be larger. In the case that the combining and transforming step is performed on digital data.

In either case, it may comprise multiplying said signals by a transformation matrix, said transformation matrix having one dimension equal to said number of antennas and a smaller dimension equal to said reduced number of sparse signals.

An advantage of the combining and transforming step being performed on digital signals and in particular using a transformation matrix, is that this allows reconfiguration, such that where it is determined that the channel state has changed, perhaps due to the arrival of new user equipment or the movement of user equipment or a transceiver failing, then the transformation matrix may be altered such that a different combination of signals may be selected to improve the channel state. As the transformation and combination of signals is performed digitally using configurable circuitry such as a transformation matrix, then adapting the system to these changes is straightforward.

In some embodiments, said combining step comprises combining signals from said plurality of antenna elements in a random or semi-random manner such that signals from all or substantially all of said antenna elements each contribute a similar amount to said reduced number of sparse signals.

In order to provide reduced signals that can be used for a high quality channel state estimation, it is advantageous if signals from each antenna element are given a similar importance or weighting. However, in some circumstances it may be that a transceiver loses its functionality and as such one or two antenna elements may not be able to be considered. In such a case, the combination of the signals from the other antenna elements can take account of this and the signals can be combined to generate a reduced set of signals that can still provide a high quality signal estimation. With regard to contributing a similar amount, this can be determined in conjunction with channel state measurements, such that a combination that provides high quality channel states is selected.

In some embodiments, the method further comprises processing said reduced number of sparse signals and in conjunction with estimated channel state information to derive signals transmitted by said at least one user equipment.

Signals transmitted by the user equipment can be derived from these sparse signals using channel state information that the processor may itself derive as is described later.

In some embodiments, the method comprises performing said steps of said method of said first aspect of the present invention, for at least one predetermined pilot signal received at said plurality of antenna elements from at least one user equipment; and analysing said reduced number of sparse signals output to said processor and said predetermined pilot signals using a reconstruction algorithm based on compressive sensing techniques to generate said channel state information.

Owing to the sparse nature of the signals output to the processor, reconstruction algorithms based on compressive sensing techniques may be used to generate channel state information where the signal received at the antenna elements are known. Once such channel state information has been derived this can be used as a template, such that further sparse signals that are output from the antenna array can be analysed using this channel state information to derive the user equipment signals that generated them.

In some embodiments, the method further comprises periodically generating updated channel state information by periodically performing said steps described in the previous embodiment.

The channel state information can be periodically updated using predetermined pilot signals and in this way, as circumstances change, the channel state information will reflect this and an accurate estimation of signals transmitted by the user equipment can be determined.

In some embodiments, said reconstruction algorithm estimates a combined effect of a wireless channel transmitting said signal and a coupling effect between antenna elements on said signal such that said coupling effects are compensated for by said channel state information.

The channel state information that is determined from the pilot signals may include the combined effect of the wireless channel that is transmitting the signal and the coupling effect that occurs between antenna elements. In this way, the coupling effects are reflected in the channel state information and thus, there is no requirement to reduce coupling between antenna elements as has conventionally been the case. This results in a hardware saving as any insulation and casing previously used to isolate individual elements will no longer be required. In fact, in some cases the coupling between the antenna elements may improve the channel state estimations as it increases the correlation between the signals and therefore increases the sparsity of the transformed signals, which can lead to an improved reconstruction algorithm. Thus, there are dual advantages of both improving the reconstruction algorithm, and also of decreasing the cost of the antenna array.

In some embodiments, said reconstruction algorithm further estimates an effect of imperfections in elements from said plurality of antenna elements up to and including said transceivers, such that said imperfections are compensated for by said channel state information.

The reconstruction algorithm may also estimate an effect of imperfections in elements in the radio frequency path of the antenna and again this allows cheaper components with imperfections to be used without decreasing the accuracy of the signal estimation of signals received by the antenna array.

In some embodiments, the method further comprises in response to detecting a change in said channel state information amending at least one of said transforming and combining step.

Where a change in the channel state information is detected in the periodic updating of this channel state information and in particular where there is a deterioration in this channel state, then it may be advantageous to amend the combining and transforming steps such that a different combination and transformation of the signals from the antenna element is performed. The effect of such changes can be determined from detecting output signals while predetermined pilot signals provide the input signals and changes can be made until an improved channel state is obtained. In this way, where user equipment move or where a transceiver may no longer function correctly, then the system may be updated to take account of this and the quality of the signal estimation may be improved or at least not unduly reduced by these effects.

A second aspect of the present invention provides a computer program which when executed by a computer is operable to control said computer to perform a method according to a first aspect of the present invention.

A third aspect of the present invention provides an antenna array comprising: a plurality of antenna elements configured to receive signals from at least one user equipment; a plurality of transceivers; transforming logic operable to transform said signals to at least one different domain to generate sparse signals; combining logic operable to combine at least some of said signals to form a reduced number of signals; and output circuitry operable to output said reduced number of sparse signals.

In some embodiments, said antenna array further comprises signal processing circuitry, said signal processing circuitry being operable to process said reduced number of sparse signals using channel state information, to derive signals transmitted by said at least one user equipment.

Owing to the reduced number of sparse signals that are transmitted to the signal processing circuitry which signal processing circuitry of a reduced size and with reduced power requirements can be used.

In some embodiments, said signal processing circuitry is operable, in response to predetermined pilot signals being received at said plurality of antenna elements, to analyse said reduced number of sparse signals output to said processor and said predetermined pilot signals using a reconstruction algorithm based on compressive sensing techniques to generate said channel state information.

In some embodiments, said transforming and combining logic is provided as a single unit, while in other embodiments, they are formed as different units of logic. In this regard the logic may be software or hardware circuitry.

In some embodiments said transforming and combining logic is located between said antenna elements and said transceivers such that said plurality of transceivers such that a number of transceivers comprises said reduced number corresponding to said reduced number of signals.

In some embodiments, the antenna elements are located with a spacing of more than 0.75 of a wavelength of a central operating frequency of said antenna.

Owing to the sparse nature of the signals, compressive sensing techniques can be used and as such a reduced frequency of sensing can be used. This may be reflected by using antenna elements being spaced further apart than is conventionally provided. In this regard conventional antenna elements may have a spacing of a half a wavelength or less in order to meet Nyquist requirements.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates a MIMO and associated processing circuitry according to an embodiment;
Figure 2 shows an alternative embodiment to that of Figure 1;
Figure 3A shows a RF transformation matrix operating on a massive MIMO array and connected to a reduced number of transceivers;
Figure 3B shows a transformation matrix operating on digital signals output from a massive MIMO array via transceivers;
Figure 4 schematically shows the modelling of an antenna array setup in joint angle-delay space that is able to exploit sparsity;
Figure 5 shows a flow diagram illustrating steps in a method of generating channel state information for a MIMO according to an embodiment;
Figure 6 shows a flow diagram illustrating steps in a method of deriving input signals from reduced sparse output signals at a MIMO according to an embodiment; and
Figure 7 shows a flow diagram illustrating steps in a method of periodically updating channel state information for a MIMO according to an embodiment.

DESCRIPTION OF THE EMBODIMENTS

Before discussing the embodiments in any more detail, first an overview will be provided.

Embodiments seek to reduce the signals to be processed and in some cases the number of transceivers i.e. hardware chains required and consequently the overall hardware complexity and power consumption in an antenna array such as a MIMO system, particularly a massive MIMO system without compromising the performance of such a massive MIMO system.

In order to do this the use of sparsity techniques to characterize massive MIMO wireless channels and enable sub-Nyquist spatial sampling and perform channel estimation with reduced transceivers that would typically require significantly more antennas and transceivers is considered.

The focus is both on hardware design to reduce overall complexity as well as signal processing algorithms that decode and reconstruct a high resolution estimate of a signal.

In this regard the inventors recognised that there will be considerable correlation between signals received at multiple antenna elements in arrays such as MIMO and that such data when transformed to another domain such as from the time to the frequency domain would provide a sparse data set. Sparse data sets can be solved using compressive sensing techniques even where there are more unknowns than there are equations. Thus, techniques that combine and transform signals from different antenna elements are used, and these generate a reduced number of signals which are sparse and can therefore be analysed using compressive sensing techniques. In this way a reduced amount of signal data is provided to a signal processor which owing to the sparse nature of the data may still, using compressive sensing processing techniques that exploit the sparse nature of the data, be used to derive the original signals.

In this regard in order to be able to derive the original signals channel state information for the channels that the signals travel along needs to be derived. This is done using known pilot signals as input signals and analysing these in conjunction with the combined and transformed signals from the antenna. Compressive sensing techniques using a reconstruction algorithm are used to derive channel state information which in preferred cases reflects not only the signal path from the user equipment to the antenna but also coupling between antenna elements and imperfections in the radio frequency signal path within the antenna. This channel state information can then be used to derive original signals from the reduced sparse signals output by the antenna. In some embodiments the channel state information and in some cases the combining and transforming logic is periodically updated to reflect changes in environment and in the antenna itself.

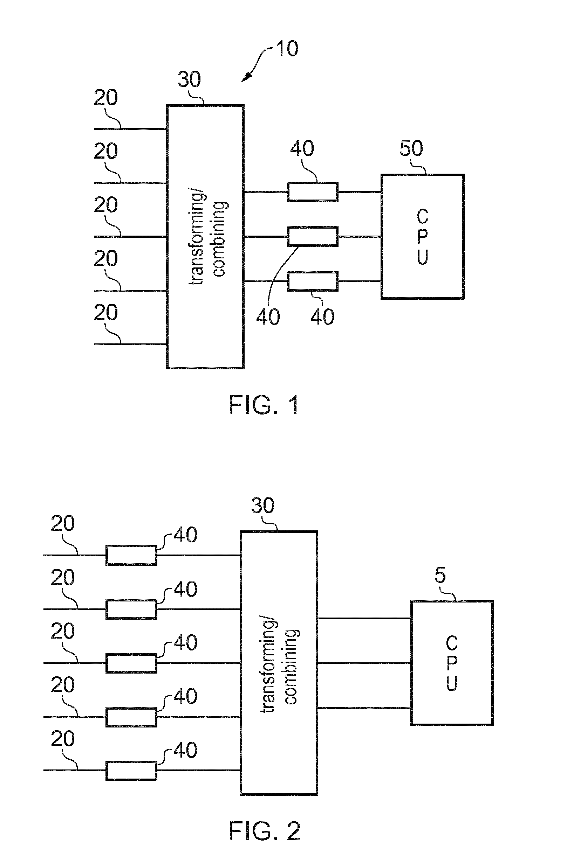

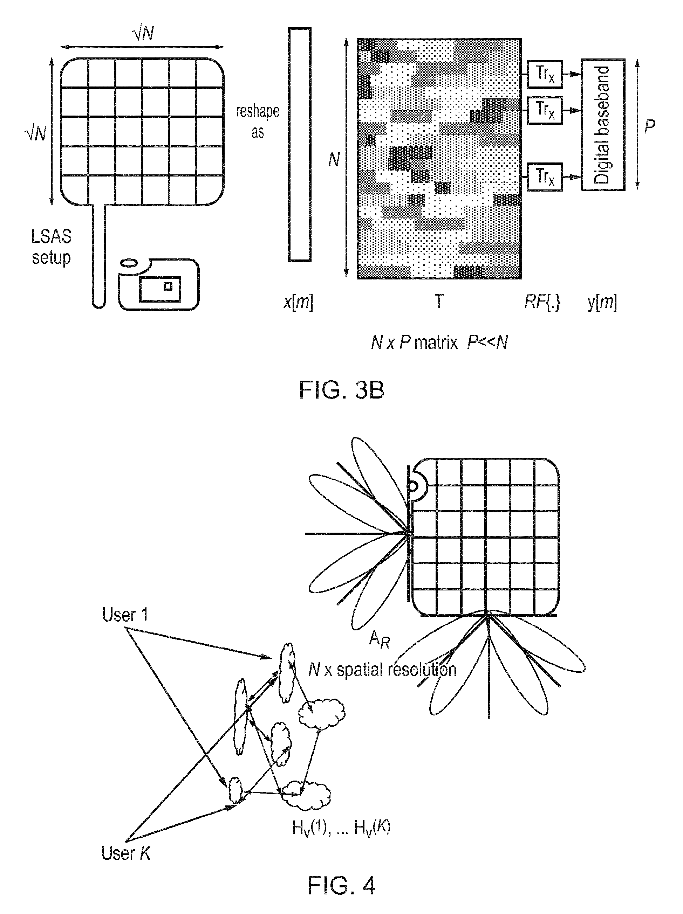

Figure 1 schematically shows a multiple input antenna array 10 according to an embodiment. The radio frequency signals received at the multiple antenna elements 20 are combined and transformed in combining and transforming logic 30 and a reduced number of sparse signals are output. The combining and transforming logic combines the different received signals in different ways, but preferably, a signal received at each antenna element will contribute to at least one of the reduced number of signals that are transmitted to transceivers 40. This logic may simply comprise circuitry with different path lengths and different combining elements or it may be formed to mirror a transforming matrix as is shown in Figure 3B. Combining the received analogue signals at this point reduces the number of transceivers required saving on both power and hardware costs.

In this regard in a conventional system a transceiver would be required for each antenna element whereas due to the combining and transforming logic combining the received input signals such that the number of output signals is lower than the number of input signals received from each antenna element, fewer transceivers are required. Furthermore, this results in fewer signals being sent to the processing unit 50, resulting in fewer signal paths and a reduced processing capacity requirement.

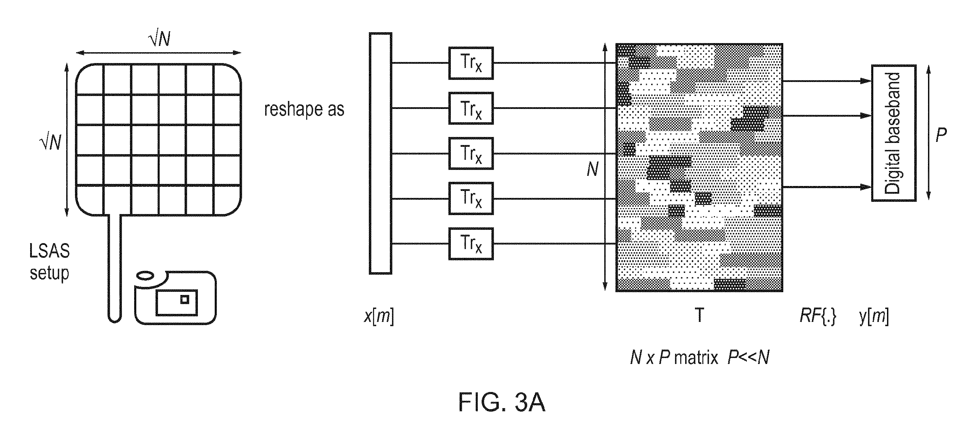

Figure 2 shows an alternative embodiment of the multiple input antenna where the transforming and combining logic 30 is arranged after the transceivers 40. Thus, in this case there is a transceiver for each antenna element and these convert the received RF analogue signals to digital signals that are then processed by the transforming and combining logic 30. This logic may be circuitry or it may be a software algorithm for transforming and combining the signals prior to sending a reduced number of signals to the CPU. In this regard the algorithm may take the form of a transforming matrix T which both transforms and combines the signals as is detailed below. The transforming matrix may be a single matrix T or it may be two matrices one performing the transformation to anther domain and a further one performing the combining step. Figure 3A schematically shows a single transforming matrix operating on digital signals output from a plurality of transceivers. The matrix transforms and combines the signals thereby reducing the number of digital signals from N to P.

Figure 3B schematically shows this matrix as the transforming and combining logic in an arrangement similar to that of Figure 1 where the matrix operates on the RF signals and a reduced number of transceivers are required.

Figure 4 schematically shows a modelling antenna array in joint angle-delay space that exploits sparsity and schematically shows the channels **H** for each user k as is explained in more detail below.

In one embodiment there is proposed a $P \times N$ RF transformation matrix **T** operating on N MIMO antenna elements and converting them to $P$ RF signal paths, which are subsequently downconverted to digital base-band, sampled and post-processed to obtain a $P$ x 1 vector of received signals y as shown in Fig. 3. Typically $N \gg P, N \approx 4P$.

The transformation matrix **T** can be seen as a random RF matrix or feeder network transforming $N$ signals to $P$ signals. The physical RF impairments such as coupling between antennas as well as amplitude, frequency and phase offsets between different RF components are also accounted and compensated with the reduced $P$ signals.

Subsequently, we propose to use the $P$ dimensional signals with compressive sensing tools exploiting the sparse nature of the wireless channel in joint angle-delay domain to obtain a high resolution estimate of the received signal.

This high resolution estimate of the wireless signal can be used to either obtain a high resolution channel state information (CSI) or to improve reception of weak signals at massive MIMO array with reduced transceivers. This setup will also help to reduce the overall energy consumption of RF and digital chains.

**Model:**

Consider a massive MIMO setup, made of say $\sqrt{N} \times \sqrt{N}$ antennas radiating and receiving signals from arbitrary user equipment or small cells through a frequency selective and multipath environment. For simplicity, the UEs transmit using one antenna element. Let $K$ be the number of UEs and $L$ be the order of their wireless channels due to the delay spreads of various multipaths. For simplicity and consistency of notation, we stack rows or columns of the massive **MIMO** antenna setup and denote them as an N x 1 vector. The array geometry can be arbitrary (viz. linear, planar, nonuniform, etc) and contained in the overall antenna array response.

For notational simplicity, we assume the transmit antennas are omnidirectional omitted in subsequent discussions. The wireless channel order **L** = ⌈W$\tau$max⌉ + 1, where W is the bandwidth and $\tau_{max}$ corresponds to maximum time delay spread. The overall degree of freedom due to the introduction of the massive MIMO setup is $D = NL$.

In order to characterize this degree of redundancy, the discrete-time spatio temporal wireless channel is represented in a joint angle-delay space using an N x 1 vector of order L:

$$\mathbf{h}^{(k)}[l] = \sum_{r=1}^{K} \mathbf{a}(\theta_r) H_v(l, r) = \mathbf{A}_R \mathbf{h}_v^{(k)}[l] \quad \forall l \in 0, \cdots, L-1.$$

where $A_R$ is the antenna array response at the receiver for an angle of arrival $\theta_r$. The joint angle-delay space is characterised by resolution $R$ spatially sampling the delay spread versions of wireless channel. Extending the antenna array model to $K$ users, the overall wireless channel represented using an $N \times KL$ matrix:

$$\mathbf{H} = \mathbf{A}_R \left[ \mathbf{H}_v^{(1)} \cdots \mathbf{H}_v^{(K)} \right]$$

where $\mathbf{H}_v^{(k)} = \left[ \mathbf{h}_v^{(k)}[0], \cdots, \mathbf{h}_v^{(k)}[L-1] \right]$.

The transmitted signals at time instant $t = mT$ $t \in [o,T)$ for arbitrary m from all users are received at the MIMO array and stacked as an $N \times 1$ vector x[m]:

$$\mathbf{x}[m] = \mathbf{H} \begin{bmatrix} \mathbf{s}^{(1)}[m] \\ \vdots \\ \vdots \\ \mathbf{s}^{(K)}[m] \end{bmatrix} + \tilde{\mathbf{z}}[m]$$

where $s^{(k)}[m] = [s^{(k)}[m], \cdots s^{(k)}[m - L + 1)]]^T$
and $s^{(k)}[m]$ corresponds to user signal at time instant $t = mT$ and $\bar{\mathbf{Z}}[m]$ is an $N \times 1$ vector containing additive noise.

## Setup:

In order to reduce the hardware complexity of the overall setup as well as to reduce the number of transceivers, we propose to introduce an P x $N$ RF transformation matrix T operating on $N$ MIMO antenna elements and converting them to P RF signal paths, which are subsequently downconverted to digital base-band, sampled and post-processed to obtain a $P \times 1$ vector of received signals y:

$$\mathbf{y}[m] = \mathcal{RF}\left\{ \mathbf{TH}\underline{\mathbf{s}} + \tilde{\mathbf{z}}[m] \right\} \approx \mathbf{TH}\underline{\mathbf{s}}[m] + \mathbf{z}[m].$$

The above transformation matrix T can be seen as a feeder network transforming signals from increased dimension to reduced dimension. However, it is not designed to produce a set of orthogonal beams or specific beams as in a Butler matrix. It is a random matrix designed to reduce the number of transceivers while exploiting the sparsity of the scattering environment to obtain a linear combination of signals at the antenna array.

In practice, a large **MIMO** array will introduce significant coupling between antenna elements when they are stacked close to each other. Coupling covers sparsity in angle but not in time, and for simplicity can be modelled as an $N \times N$ block tri-diagonal matrix **M** operating on the overall channel matrix **H**. In standard systems, the antenna elements are insulated and cased in order to minimize the propagation of surface waves and suppress coupling. Thus in standard systems, they can be approximated as an identity matrix: $\mathbf{M}_{standard} = \mathbf{I}$. All these changes increase typically the design and manufacture cost of the MIMO array. By explicitly consider this coupling term within the overall expression and estimating the overall wireless channel + coupling coefficient, we alleviate this problem. The signal model can be written including the coupling matrix **M** as

$$\mathbf{y}[m] = \mathbf{T}\,[\mathbf{H_M}]\,\underline{\mathbf{s}}[m] + \mathbf{z}[m] \qquad \mathbf{H_M} = \mathbf{MH}.$$

The RF chains denoted by the *RF*{.} are subject to imperfections, non-linearities and loss. Typically, these terms must be estimated and calibrated in existing systems and their complexity increases for increasing N. The impairments can be modeled as an $P \times P$ diagonal matrix **R** operating on the output of the transformation matrix **T.**

$$\mathbf{y}[m] = \mathbf{R}\,\mathbf{T}\,[\mathbf{H_M}]\,\underline{\mathbf{s}}[m] + \mathbf{z}[m] \qquad \mathbf{R} = \begin{bmatrix} r_1 & 0 & 0 \\ 0 & \ddots & 0 \\ 0 & 0 & r_P \end{bmatrix}.$$

To reduce the hardware complexity, we refrain from estimating these components independently.

**Methods - compressive sensing CS based high resolution channel estimation:**

It would be desirable to essentially estimate the combined effect of the wireless channel **H,** coupling matrix **M** and the imperfections matrix **R** when used in combination with the reduced dimension transformation **T.** Note that we do not have to individually estimate each and every term, and a combined estimation of these terms is sufficient to subsequently apply detection algorithms and estimate signals from desired user. To this end, we assume that the massive **MIMO** array has knowledge of pilot signals from a given user and applies them to estimate the wireless channel.

Consider a pilot signal $s(k)[t = \frac{m}{M}T]$ transmitted from user k and observed within the observation interval *t* $\in$ [o,T). The discrete samples *s(k)*[1],..., *s(k)*[M] correspond to the pilot sequence. The massive MIMO array observe such sequences from all K users as

$$\mathbf{y}[m] = \mathbf{R}\,\mathbf{T}\,[\mathbf{H_M}]\,\underline{\mathbf{s}}[m] + \mathbf{z}[m].$$

Stacking these signals for the entire observation interval leads to

$$\begin{aligned} [\mathbf{y}[1], \cdots, \mathbf{y}[M]] &= \mathbf{RTH_M}\,[\underline{\mathbf{s}}[1], \cdots, \underline{\mathbf{s}}[M]] + [\mathbf{z}[1], \cdots, \mathbf{z}[M]] \\ \mathbf{Y} &= \underbrace{\mathbf{RTH_M}}_{\text{unknown}\,\mathbf{R},\,\mathbf{H_M}}\quad \underbrace{\mathbf{S}}_{\text{data: full row rank}} + \mathbf{Z} \end{aligned} \qquad (2)$$

The pilot signals are assumed to be drawn from a random ensemble of i.i.d vectors and are uncorrelated with each other. For the observation interval $M \geq LK$, **S** is a fat matrix with full row rank. Thus, there is a valid pseudo-inverse of **S**, and postmultiplying the above expression using $\mathbf{S}^{\dagger}$ and neglecting the noise terms for the moment:

$$\mathbf{YS}^{\dagger} \approx \mathbf{RT}\tilde{\mathbf{H}} \quad \Leftrightarrow \quad \underline{\mathbf{Y}} \approx \mathbf{RT}\bar{\mathbf{H}}.$$

Applying the Kronecker product identity vec(**ABC**)= ($\mathbf{C}^T \otimes \mathbf{A}$)vec(**B**) to the above expression leads to

$$\text{vec}\left[\mathbf{YS}^\dagger\right] = (\hat{\mathbf{H}} \otimes \mathbf{R})\text{vec}(\mathbf{T}) \Leftrightarrow \underline{\mathbf{y}} = \mathbf{H}\,\underline{t}.$$

Typically in a CS based setup, the sparse signals are projected over a random basis, and the signals are reconstructed from this random projection. In the above expression, $\Phi$ can be seen as the random projection matrix usually seen in either basis pursuit or lasso reconstruction or Dantzig selector based CS techniques:

$$\vartheta^{\text{CS}} = \arg\min_{\vartheta} \|\vartheta\|_1 \quad \text{such that} \quad \|\mathbf{y} - \Phi\vartheta\|_\infty \leq \text{threshold}.$$

Alternatively, they can be used in combination with greedy algorithms such as orthogonal matching pursuit or similar algorithms mentioned in [8]. For simplicity, the above optimization is represented as $\vartheta_{\text{CS}} = CS(\Phi, y, \text{threshold} = \epsilon)$.

Our massive MIMO array and the transformation matrix setup: $\mathbf{TA}_R$ can be seen as this random transformation i.e. $\Phi = T$, operating on sparse wireless channel H. Plugging the rest of the terms in the above expression leads to pilot

$$\mathbf{H}^{\text{CS}} = \arg\min_{\mathbf{H}} \|\mathbf{H}\|_1 \quad \text{such that} \tag{3}$$

$$\| \underbrace{\mathbf{YS}^\dagger}_{\text{Observation+pilot}} - \underbrace{\mathbf{T}}_{\text{known projections}} \underbrace{\mathbf{H}}_{\text{unknown channel}} \|_\infty \leq \text{threshold}$$

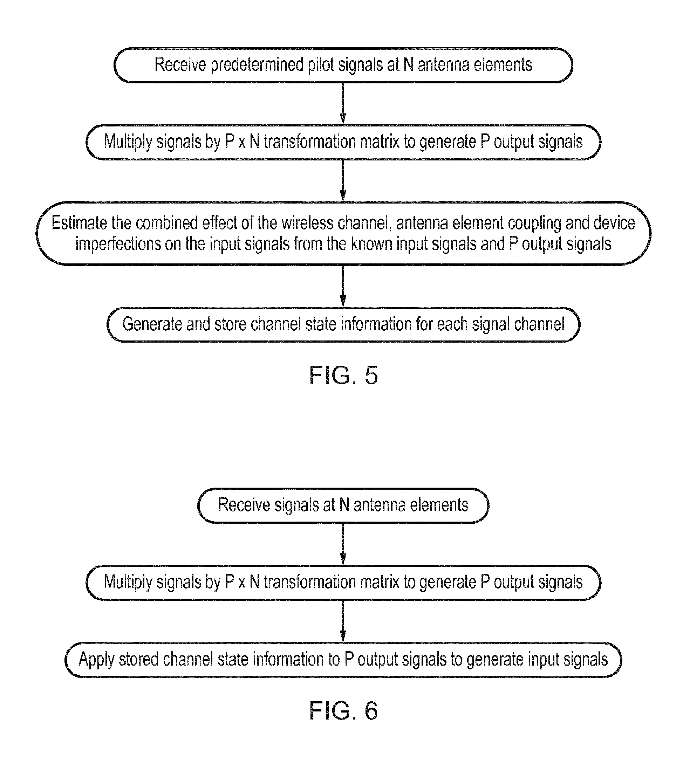

Figure 5 shows a flow diagram schematically illustrating steps of a method for generating channel state information for a multiple input/multiple output antenna. In this embodiment, predetermined pilot signals are received at the antenna elements and these signals are multiplied by a $P \times N$ transformation matrix to generate P output signals where $P$ is less than $N$ and in this way, the number of signals are reduced. This transformation matrix also transforms the domain of the signals such that the signals produced are sparse. An analysis of the output and input signals is made to generate an estimate of the combined effect of the path of the signals, that is the wireless channel, the coupling between antenna elements and imperfections in the radio frequency components. From this channel state information is generated and stored for each signal channel.

Figure 6 shows steps of a method performed at processing circuitry of a multiple input/multiple output antenna which uses the state information determined by the method of Figure 5 to reconstruct input signals from the reduced sparse output signals received at the processing circuitry.

Signals from $N$ antenna elements are received and these signals are multiplied by the $P \times N$ transformation matrix to generate $P$ output sparse signals. The stored channel state information is then used to generate input signals from the P sparse output signals.

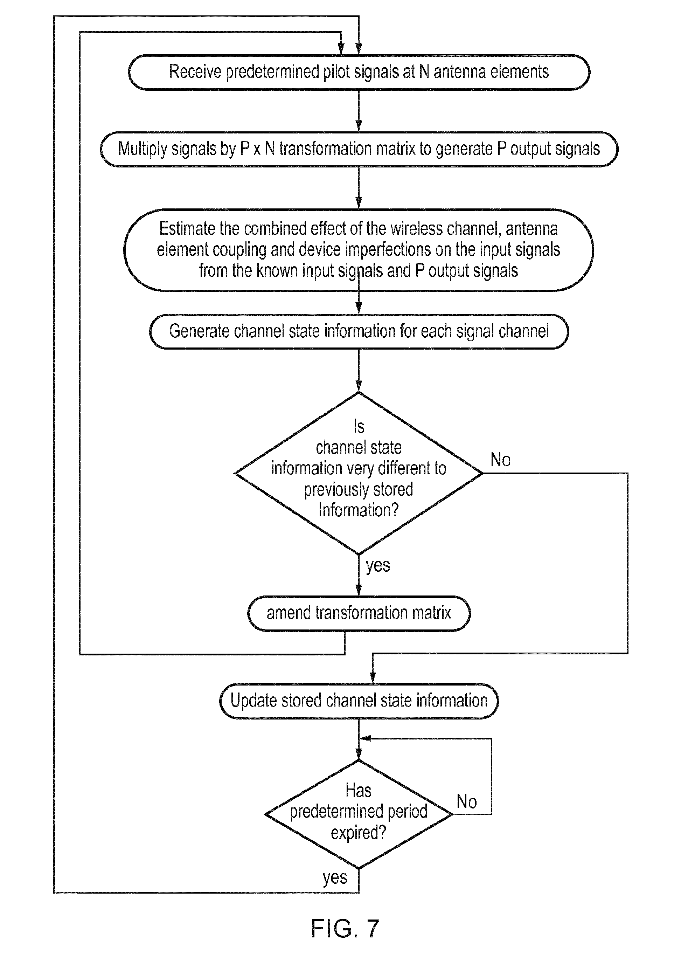

Figure 7 shows steps of a method for periodically updating the channel state information in order to compensate for changes in the environment surrounding the antenna. Thus, periodically, predetermined pilot signals are received at the $N$ antenna elements and these signals are multiplied by the transformation matrix to generate the reduced number of sparse output signals. The combined effect of the wireless channel, coupling of the antenna elements and imperfections in the radio channel elements are then considered by comparing the $P$ output signals with the known input signals and channel state information for each signal channel is generated. It is then determined if this channel state information is very different to previously stored information.

In this regard, in some cases the question will not be is it different but is the channel state worse, such that changes for the better do not trigger an amendment of the transformation matrix. If the change is considered significant (or significantly worse), then the transformation matrix is amended and the procedure is repeated until channel state information that is similar to that previously received or better than that previously received is found. At this point the updated channel state information is stored as is the amended transformation matrix.

This procedure is performed periodically such that the system is able to respond to changes in the environment and in the antenna itself. In this regard, if one of the transceivers for example were to malfunction or its performance to deteriorate, then amendments in the transformation matrix may allow this to be compensated for and the performance of the antenna may remain at a similar level to that which it was previously.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method performed on signals received at a plurality of elements of an antenna array comprising:

   transforming said signals to at least one different domain to generate sparse signals;
   combining at least some of said signals to form a reduced number of signals; and
   outputting said reduced number of sparse signals.

2. A method according to claim 1, comprising a further step of converting said signals using a plurality of transceivers.

3. A method according to claim 2, wherein said steps of combining and transforming said signals are performed together as a single step prior to converting said signals at said plurality of transceivers.

4. A method according to any preceding claim, wherein said combining and transforming steps are performed as a single step and comprises multiplying said signals by a transformation matrix, said transformation matrix having one dimension equal to said number of antennas and a smaller dimension equal to said reduced number of sparse signals.

5. A method according to any preceding claim, wherein said combining step comprises combining signals from said plurality of antenna elements in a random or semi-random manner such that signals from all or all except one or two of said antenna elements each contribute a similar amount to said reduced number of sparse signals.

6. A method according to any preceding claim, further comprising
processing said reduced number of sparse signals in conjunction with estimated channel state information to derive signals transmitted by said at least one user equipment.

7. A method according to claim 6, comprising
performing said steps of said method of any one of claims 1 to 6, for at least one predetermined pilot signal received at said plurality of antenna elements from at least one user equipment; and
analysing said reduced number of sparse signals output to said processor and said predetermined pilot signals using a reconstruction algorithm based on compressive sensing techniques to generate said channel state information.

8. A method according to claim 7, comprising periodically generating updated channel state information by periodically performing said steps of claim 7.

9. A method according to any one of claims 7 or 8, wherein said reconstruction algorithm estimates a combined effect of a wireless channel transmitting said signal and a coupling effect between antenna elements on said signal such that said coupling effects are compensated for by said channel state information.

10. A method according to claim 2 and claim 8 or 9 wherein said reconstruction algorithm further estimates an effect of imperfections in elements from said plurality of antenna elements up to and including said transceivers, such that said imperfections are compensated for by said channel state information.

11. A method according to any one of claims 8 to 10, comprising in response to detecting a change in said channel state information amending at least one of said transforming and combining step.

12. A computer program which when executed by a computer is operable to control said computer to perform a method according to any one of claims 1 to 11.

13. An antenna array comprising:

a plurality of antenna elements configured to receive signals from at least one user equipment;
a plurality of transceivers;
transforming logic operable to transform said signals to at least one different domain to generate sparse signals;
combining logic operable to combine at least some of said signals to form a reduced number of signals; and
output circuitry operable to output said reduced number of sparse signals.

14. An antenna array according to claim 13, and further comprising signal processing circuitry, said signal processing circuitry being operable to process said reduced number of sparse signals using channel state information to derive signals transmitted by said at least one user equipment.

15. An antenna array according to claim 13 or 14, wherein said signal processing circuitry is operable, in response to predetermined pilot signals being received at said plurality of antenna elements, to analyse said reduced number of sparse signals output to said processor and said predetermined pilot signals using a reconstruction algorithm based on compressive sensing techniques to generate said channel state information.

**Amended claims in accordance with Rule 137(2) EPC.**

1. A method performed on signals received at a plurality of elements of an antenna array comprising:

transforming said signals to at least one different domain to generate sparse signals;
combining at least some of said signals to form a reduced number of sparse signals; and
outputting said reduced number of sparse signals.

2. A method according to claim 1, comprising a further step of converting said signals from analogue to digital signals using a plurality of transceivers (40).

3. A method according to claim 2, wherein said steps of combining and transforming said signals are performed together as a single step prior to converting said sparse signals from analogue to digital signals at said plurality of transceivers (40).

4. It method according to any preceding claim, wherein said combining and transforming steps are performed as a single step and said step comprises multiplying said signals by a transformation matrix, said transformation matrix having one dimension equal to said number of antennas and a smaller dimension equal to said reduced number of sparse signals.

5. A method according to any preceding claim, wherein said combining step comprises combining signals from said plurality of antenna elements in a random or semi-random manner such that signals from all or all except one or two of said antenna elements each contribute an amount to said reduced number of sparse signals.

6. A method according to any preceding claim, further comprising
processing said reduced number of sparse signals in conjunction with estimated channel state information to derive signals transmitted by said at least one user equipment.

7. A method according to claim 6, comprising
performing said steps of said method of any one of claims 1 to 6, for at least one predetermined pilot signal received at said plurality of antenna elements from at least one user equipment; and
analysing said reduced number of sparse signals output to said processor and said predetermined pilot signals using a reconstruction algorithm based on compressive sensing techniques to generate said channel state information.

8. A method according to claim 7, comprising periodically generating updated channel state information by periodically performing said steps of claim 7.

9. A method according to any one of claims 7 or 8, wherein said reconstruction algorithm estimates a combined effect of a wireless channel transmitting said signal and a coupling effect between antenna elements on said signal such that said coupling effects are compensated for by said channel state information.

10. A method according to claim 2 and claim 8 or 9 wherein said reconstruction algorithm further estimates an effect of imperfections in elements from said plurality of antenna elements up to and including said transceivers, such that said imperfections are compensated for by said channel state information.

11. A method according to any one of claims 8 to 10, comprising in response to detecting a change in said channel state information amending at least one of said transforming and combining step.

12. A computer program which when executed by a computer is operable to control said computer to perform a method according to any one of claims 1 to 11.

13. An antenna array (10) comprising:

a plurality of antenna elements (20) configured to receive signals from at least one user equipment;
a plurality of transceivers (40);
transforming logic (30) operable to transform said signals to at least one different domain to generate sparse signals;
combining logic (30) operable to combine at least some of said signals to form a reduced number of sparse signals; and
output circuitry operable to output said reduced number of sparse signals.

14. An antenna array according to claim 13, and further comprising signal processing circuitry, said signal processing circuitry being operable to process said reduced number of sparse signals using channel state information to derive signals transmitted by said at least one user equipment.

15. An antenna array according to claim 14, wherein said signal processing circuitry is operable, in response to predetermined pilot signals being received at said plurality of antenna elements, to analyse said reduced number of sparse signals output to said processor and said predetermined pilot signals using a reconstruction algorithm based on compressive sensing techniques to generate said channel state information.

12

FIG. 1

FIG. 2

FIG. 3A

√N

√N

LSAS
setup

reshape
as

$x[m]$

N

T

$RF\{.\}$

$y[m]$

$Tr_x$

$Tr_x$

$Tr_x$

Digital baseband

P

N x P matrix  P<<N

FIG. 3B

User 1

$A_R$

N x spatial resolution

$H_v(1), ... H_v(K)$

User K

FIG. 4

Receive predetermined pilot signals at N antenna elements

Multiply signals by P x N transformation matrix to generate P output signals

Estimate the combined effect of the wireless channel, antenna element coupling and device imperfections on the input signals from the known input signals and P output signals

Generate and store channel state information for each signal channel

## FIG. 5

Receive signals at N antenna elements

Multiply signals by P x N transformation matrix to generate P output signals

Apply stored channel state information to P output signals to generate input signals

## FIG. 6

Receive predetermined pilot signals at N antenna elements

Multiply signals by P x N transformation matrix to generate P output signals

Estimate the combined effect of the wireless channel, antenna element coupling and device imperfections on the input signals from the known input signals and P output signals

Generate channel state information for each signal channel

Is channel state information very different to previously stored Information?

No

yes

amend transformation matrix

Update stored channel state information

Has predetermined period expired?

No

yes

FIG. 7

Europäisches
Patentamt

European
Patent Office

Office européen
des brevets

**EUROPEAN SEARCH REPORT**

Application Number

EP 15 30 5059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AYACH OMAR EL ET AL: "Spatially Sparse Precoding in Millimeter Wave MIMO Systems", IEEE TRANSACTIONS ON WIRELESS COMMUNICATIONS, IEEE SERVICE CENTER, PISCATAWAY, NJ, US, vol. 13, no. 3, 1 March 2014 (2014-03-01), pages 1499-1513, XP011543836, ISSN: 1536-1276, DOI: 10.1109/TWC.2014.011714.130846 [retrieved on 2014-03-20] | 1-5,12 | INV. H04L25/02 H04B7/08  ADD. H04B7/04 |
| Y | * Sections I-II, IV; figure 1 * | 6-11, 13-15 | |
| X | YUNLONG CAI ET AL: "Adaptive minimum BER reduced-rank interference suppression for very large multiuser MIMO systems", SENSOR SIGNAL PROCESSING FOR DEFENCE (SSPD 2012), IEEE, 25 September 2012 (2012-09-25), pages 1-5, XP032433705, DOI: 10.1049/IC.2012.0100 ISBN: 978-1-84919-712-0 | 1,2,4,12 | |
| A | * Sections II-III; figure 1 * | 3,5 | |
| X | ALKHATEEB AHMED ET AL: "Channel Estimation and Hybrid Precoding for Millimeter Wave Cellular Systems", IEEE JOURNAL OF SELECTED TOPICS IN SIGNAL PROCESSING, IEEE, US, vol. 8, no. 5, 1 October 2014 (2014-10-01), pages 831-846, XP011558894, ISSN: 1932-4553, DOI: 10.1109/JSTSP.2014.2334278 [retrieved on 2014-09-11] * Sections I-III, VI; figures 1-2 * | 6-11, 13-15 | |

TECHNICAL FIELDS
SEARCHED (IPC)

H04L
H04B

-/--

The present search report has been drawn up for all claims

| Place of search | Date of completion of the search | Examiner |
|---|---|---|
| The Hague | 11 January 2016 | Devillers, Bertrand |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 5059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SINH LE HONG NGUYEN ET AL: "Compressive sensing-based channel estimation for massive multiuser MIMO systems", 2013 IEEE WIRELESS COMMUNICATIONS AND NETWORKING CONFERENCE (WCNC), 1 April 2013 (2013-04-01), pages 2890-2895, XP055239876, DOI: 10.1109/WCNC.2013.6555020 ISBN: 978-1-4673-5937-5 * Sections II-IV * ----- | 6-11, 13-15 | |

TECHNICAL FIELDS
SEARCHED (IPC)

The present search report has been drawn up for all claims

| Place of search | Date of completion of the search | Examiner |
|---|---|---|
| The Hague | 11 January 2016 | Devillers, Bertrand |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

**Application Number**

EP 15 30 5059

The Search Division considers that the present European patent application does not comply with the requirements of unity of invention and relates to several inventions or groups of inventions, namely:

1. claims: 1-5, 12

   Design of a transformation matrix to reduce the received signal dimension in a massive MIMO system

   ---

2. claims: 6-11, 13-15

   Accurate channel state information estimation in a massive MIMO system

   ---